# FASCICULE DE BREVET EUROPEEN

(11) **EP 3 109 027 B1**
(45) Date de publication et mention de la délivrance du brevet: **06.01.2021**
(21) Numéro de dépôt: 16176175.4
(22) Date de dépôt: 24.06.2016
(51) Int. Cl.: B29C 45/14, B26F 1/24, B29C 45/26, B29C 70/54, B29C 70/78, B29C 33/00, B29C 43/40, B29C 43/36, B29C 43/18, B26D 1/00

(54) **DISPOSITIF ET PROCÉDE DE PRODUCTION D'UN ÉLÉMENT MULTICOUCHE**
VORRICHTUNG UND VERFAHREN ZUR PRODUKTION EINES MEHRSCHICHTENELEMENTS
DEVICE AND METHOD FOR PRODUCING A MULTI-LAYERED ELEMENT

(30) Priorité: 26.06.2015 FR 1555951
(43) Date de publication de la demande: 28.12.2016
(73) Titulaire: NOVARES FRANCE, 92140 Clamart (FR); Pôle Européen de Plasturgie, 01100 Bellignat (FR); FICO, 01100 Bellignat (FR)
(72) Inventeur: FOLLET TROSSET, Christian, 01250 Meyriat (FR); HUGUET, Guillaume, 01250 Chavannes sur Suran (FR); COUDEYRAS, Muriel, 01590 Dortan (FR); SCHWANDER, Mathieu, 01100 Oyonnax (FR); SALAÜN, Guillaume, 01320 Châtillon la Palud (FR)
(74) Mandataire: Delorme, Nicolas

(56) Documents cités:
- US-A- 4 860 425
- US-A- 5 038 468

## Description

La présente invention porte sur un dispositif et un procédé de production d'un élément multicouche comprenant une nappe en matériau composite et présentant au moins un poinçonnage.

Il est précisé que dans le présent document, par matériau composite, on entend un matériau comprenant, par exemple, des fibres de verre ou de carbone continues unidirectionnelles ou bi-directionnelles enduites d'un polymère, par exemple, thermoplastique et se présentant sous la forme de plaques mono ou multicouches pré-consolidées.

Traditionnellement, pour produire un élément comprenant une nappe poinçonnée et une couche injectée sur la nappe, il est connu de poinçonner la nappe dans un premier outil comprenant un poinçon et une matrice, puis d'injecter la couche dans un second outil, au cours d'une opération de surmoulage.

L'utilisation consécutive de deux outils distincts génère deux inconvénients principaux. Le premier inconvénient est que le positionnement du poinçonnage dans l'outillage peut être très imprécis de telle sorte que pour être certain d'obtenir un trou il faut prévoir un poinçonnage dont le diamètre excède celui du diamètre nominal. Ceci oblige également à réduire la quantité de fibres dans le composite à proximité du trou réduisant ainsi les performances en rigidité. Le second inconvénient de cette technologie est son coût puisqu'elle utilise deux outils dont les temps de cycle s'additionnent.

En conséquence, une méthode utilisant un unique outil a été développée. Cette méthode consiste à utiliser le moule d'injection pour poinçonner la nappe. Or, selon cette méthode, lors du poinçonnage la nappe peut glisser dans le moule, ce qui peut engendrer un mauvais poinçonnage. De plus, lors de l'injection de la couche, la portion de nappe poinçonnée peut vibrer et se déplacer sous l'effet de la poussée d'injection.

Par ailleurs, il est connu du document FR3005888 de réaliser un trou formant un collet, dans une nappe en matériau composite, en poinçonnant une portion de la nappe qui présente une pluralité d'encoches. Cette méthode permet de réaliser un poinçonnage de bonne qualité de la nappe en matériau composite. En revanche, cette méthode ne permet pas de garantir le maintien de la nappe poinçonnée lors de l'injection d'une couche polymère sur la nappe.

En outre, lors du poinçonnage de la nappe, les fibres du matériau composite peuvent glisser entre le poinçon et la matrice, empêchant ainsi le poinçonnage du matériau composite. En glissant entre le poinçon et la matrice, les fibres sont tirées à l'intérieur du matériau composite, ce qui génère un manque de fibres dans certaines parties du matériau composite et peut ainsi provoquer des déformations de la nappe.

Les dispositifs décrits dans les documents US4860425 et US5038468 ne permettent pas résoudre les problèmes susmentionnés.

En conséquence, un but de la présente invention est de fournir un dispositif de production d'un élément multicouche présentant au moins un poinçonnage, permettant de poinçonner une nappe en matériau composite et d'injecter une couche dans un même outil tout en garantissant la tenue et l'intégrité de la nappe.

Selon une définition générale l'invention porte sur un dispositif de production d'un élément multicouche selon la revendication 1.

Ainsi, d'une manière particulièrement avantageuse, le dispositif selon l'invention permet, dans un même outil, de maintenir la nappe pour la poinçonner entre le poinçon et la matrice, puis d'escamoter le serre-flan lors de l'injection de la couche. Il est remarquable que le passage du serre-flan en position haute de moulage ne nécessite pas d'intervention sur le châssis supérieur. En outre, le serre-flan permet de bloquer les fibres du matériau composite, lors de poinçonnage, pour éviter un glissement des fibres et ainsi garantir l'intégrité de la nappe.

De plus, d'une manière particulièrement avantageuse, le serre-flan en position haute et le poinçon en position déployée permettent de former une empreinte de moulage et une cavité de la couche.

Il est précisé que dans le présent document, par poinçonnage, on entend le perçage d'un matériau, par un poinçon.

Le châssis supérieur peut comprendre des moyens d'appui élastique du serre-flan en position basse de maintien et des moyens de butée du serre-flan en position haute de moulage, qui permettent de borner le déplacement du serre-flan.

Selon une disposition particulière, le châssis supérieur peut comprendre au moins une cavité configurée pour recevoir le serre-flan.

Ainsi, le serre-flan peut coulisser et s'escamoter dans la cavité.

Selon une disposition particulière, les moyens d'appui élastique comprennent un ressort positionné dans la cavité et configuré pour exercer un effort sur le serre-flan, pour faire passer le serre-flan de la position haute de moulage à la position basse de maintien.

Selon une autre disposition, les moyens d'appui élastique comprennent un organe de commande hydraulique positionné dans la cavité et configuré pour exercer un effort sur le serre-flan, de manière à déplacer le serre-flan entre la position haute de moulage et la position basse de maintien.

Ainsi, l'effort exercé par les moyens d'appui élastique permet au serre-flan de maintenir en position la nappe.

Le serre-flan peut présenter une géométrie annulaire configurée pour coulisser autour du poinçon, dans la cavité.

Le serre-flan peut comprendre au moins une entaille dans laquelle la matière formant la couche s'engage pour faire passer le serre-flan de la position basse de maintien à la position haute de moulage.

Ainsi, la pression d'injection de la couche exercée dans l'entaille peut permettre d'escamoter le serre-flan.

Selon une disposition particulière, le serre-flan peut présenter une empreinte configurée pour recevoir une portion d'extrémité du poinçon en position déployée, pour faire passer le serre-flan de la position basse de maintien à la position haute de moulage et pour former une empreinte de moulage avec la portion d'extrémité du poinçon.

Selon une disposition particulière, l'entaille du serre-flan est délimitée par un épaulement.

L'épaulement permet au serre-flan, en position haute de moulage, de former une empreinte de moulage sur la couche.

Selon une disposition particulière, les moyens de butée peuvent comprendre un épaulement dans la cavité.

L'invention porte aussi sur un procédé de production d'un élément multicouche avec un dispositif selon l'invention. Le procédé comprend les étapes de :
- Fourniture d'une nappe en matériau composite ;
- Positionnement de la nappe sur la matrice ;
- Positionnement du serre-flan en position basse de maintien pour maintenir la nappe contre la matrice ;
- Déplacement du poinçon en position déployée de poinçonnage, dans l'ouverture, pour poinçonner la nappe ;
- Injection d'une couche sur la nappe, dans une cavité délimitée par la matrice, le châssis supérieur, le poinçon et le serre-flan en position haute de moulage ;
- Formation, par le serre-flan et le poinçon, d'une ouverture de moulage sur la couche ;
- Déplacement du poinçon en position rétractée ;
- Fourniture d'un élément multicouche comprenant une nappe présentant un poinçonnage et une couche qui entoure le poinçonnage.

Ainsi, le procédé selon l'invention permet de produire un élément multicouche présentant au moins un poinçonnage. D'une manière avantageuse, ce procédé permet de poinçonner la nappe et d'injecter la couche avec un même dispositif. De plus, ce procédé permet de maintenir la nappe lors du poinçonnage et de l'injection, pour éviter un déplacement de la nappe. En outre, il est remarquable que le poinçon en position déployée et le serre-flan en position haute de moulage permettent de former une empreinte de moulage sur la couche.

D'autres caractéristiques et avantages de la présente invention se dégageront de la description qui va suivre, en regard des dessins ci-annexés qui représentent deux formes de réalisation de l'invention.
- La figure 1 est une vue schématique, en coupe, de face, d'un dispositif selon un premier mode de réalisation de l'invention, lorsque le serre-flan est en position basse de maintien et le poinçon est en position rétractée ;
- La figure 2 est une vue schématique, en coupe, de face, d'un dispositif selon un premier mode de réalisation de l'invention, lorsque le poinçon est en position déployée ;
- La figure 3 est une vue schématique, en coupe, de face, d'un dispositif selon un premier mode de réalisation de l'invention, lors de l'injection de la couche ;
- La figure 4 et une vue, en coupe, de face, d'un dispositif selon un deuxième mode de réalisation de l'invention, lorsque le serre-flan est en position basse et le poinçon est en cours de passage en position déployée ;
- La figure 5 et une vue, en coupe, de face, d'un dispositif selon un deuxième mode de réalisation de l'invention, lorsque le serre-flan est en position basse et le poinçon est en position déployée ;
- La figure 6 est une vue schématique, en coupe, de face, d'un dispositif selon un deuxième mode de réalisation de l'invention, lors de l'injection de la couche ;
- La figure 7 représente une première variante d'une portion d'extrémité d'un poinçon selon le deuxième mode de réalisation ;
- La figure 8 représente une deuxième variante d'une portion d'extrémité d'un poinçon selon le deuxième mode de réalisation ;
- La figure 9 représente une troisième variante d'une portion d'extrémité d'un poinçon selon le deuxième mode de réalisation ;
- La figure 10 représente une quatrième variante d'une portion d'extrémité d'un poinçon selon le deuxième mode de réalisation.

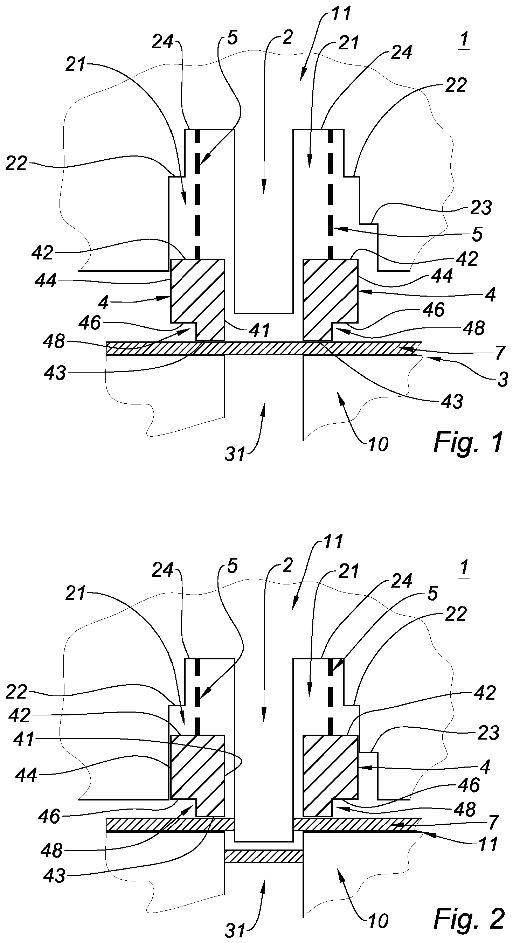

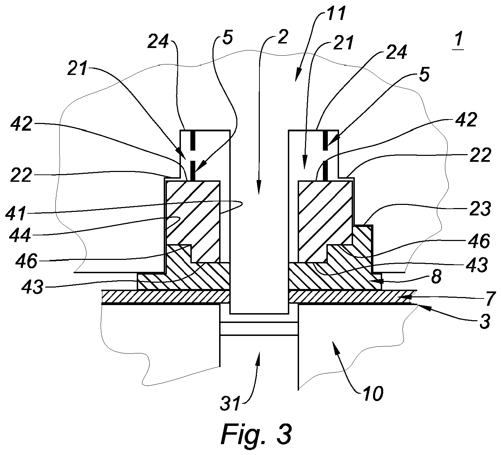

Selon le premier mode de réalisation, en référence aux figures 1 à 3, le dispositif 1 de production d'un élément multicouche présentant au moins un poinçonnage comprend une matrice 3 réalisée dans un châssis inférieur 10 d'un moule d'une presse à injecter.

La matrice 3 présente une ouverture 31 dont la fonction sera détaillée ci-après. Selon le mode de réalisation ici présenté, l'ouverture 31 est une ouverture débouchante.

On notera, par ailleurs, que selon le premier mode de réalisation, le dispositif 1 comprend un poinçon 2 réalisé dans un châssis supérieur 11 d'un moule d'une presse à injecter.

Il est précisé que le châssis inférieur 10 et le châssis supérieur 11 sont déplacés l'un par rapport à l'autre, par exemple, par un ensemble de vérins non représentés.

Selon le premier mode de réalisation présenté sur les figures 1 à 3, le poinçon 2 présente la géométrie d'une tige de section circulaire. Cependant, selon d'autres modes de réalisation, la section du poinçon 2 peut être modifiée en fonction des contraintes géométriques de l'élément à produire.

Comme on peut l'observer sur les figures 1 à 3, selon le premier mode de réalisation, le poinçon 2 est encerclé d'une cavité 21 annulaire.

La cavité 21 annulaire présente une paroi de fond 24 et un épaulement 22 intérieur annulaire. Tel que cela sera expliqué ultérieurement, l'épaulement 22 constitue des moyens de butée d'un serre-flan 4. Selon d'autres modes de réalisation, l'épaulement 22 pourrait par exemple être remplacé par un doigt.

De plus, la cavité 21 annulaire peut comprendre une encoche 23.

Le dispositif 1 comprend, en outre, un serre-flan 4.

Le serre-flan 4 présente une géométrie annulaire, complémentaire de la géométrie de la cavité 21 annulaire, permettant l'introduction du serre-flan 4 dans la cavité 21 annulaire.

Selon le premier mode de réalisation présenté sur les figures 1 à 3, le serre-flan 4 présente une ouverture interne 41, une surface supérieure 42 annulaire, une surface annulaire inférieure 43 et une surface cylindrique extérieure 44.

De plus, il est notable que le serre-flan 4 présente un épaulement 46 au niveau de la jonction de la surface cylindrique extérieure 44 avec la surface annulaire inférieure 43. L'épaulement 46 délimite une entaille 48 dont la fonction sera détaillée ultérieurement.

Selon d'autres modes de réalisation, l'épaulement 46 pourrait, par exemple, être remplacé par un bossage concave ou une surface oblique.

En outre, selon le premier mode de réalisation, le dispositif 1 comprend des moyens d'appui élastiques positionnés dans la cavité 21 annulaire. Selon le premier mode de réalisation ici présenté, les moyens d'appui élastique sont un ressort 5 représenté schématiquement sur les figures 1 à 3.

Le ressort 5 prend appui sur la paroi de fond 24 de la cavité 21 annulaire et exerce une pression sur la surface supérieure 42 annulaire du serre-flan 4.

Selon d'autres modes de réalisation, les moyens d'appui élastique peuvent être un dispositif de commande hydraulique.

A l'usage, selon le premier mode de réalisation, une nappe 7 est positionnée sur la matrice 3. La nappe 7 est en matériau composite. Initialement le poinçon 2 est en position rétractée. En position rétractée, le poinçon 2 est écarté de l'ouverture 31. En d'autres termes, lorsque le poinçon 2 est en position rétractée, le châssis inférieur 10 et le châssis supérieur 11 du moule de presse à injectée sont écartés l'un de l'autre.

Sous l'action du ressort 5, le serre-flan 4 coulisse dans la cavité 21 annulaire, autour du poinçon 2, pour passer en position basse de maintien. En position basse de maintien, la surface annulaire inférieure 43 du serre-flan 4 exerce une pression sur la nappe 7. La pression exercée par le serre-flan sur la nappe 7 permet de maintenir en position la nappe 7.

Le châssis supérieur 11 est ensuite manœuvré pour faire passer le poinçon 2 en position déployée de poinçonnage. En position déployée de poinçonnage, le poinçon 2 exerce une pression sur la portion de nappe 7 placée au dessus de l'ouverture 31.

La pression exercée par le poinçon 2 permet de poinçonner la portion de nappe 7 positionnée au dessus de l'ouverture 31.

Après le poinçonnage de la nappe 7, le poinçon 2 est maintenu en position déployée de poinçonnage, partiellement enfoncé dans l'ouverture 31.

Une couche 8 est injectée sur la nappe 7.

Le maintien en position déployée de poinçonnage permet au poinçon 2 d'avoir fonction de noyau lors de l'injection de la couche 8.

La couche 8 peut être, par exemple, en matériau thermoplastique.

Lors de l'injection, la couche 8 en phase fluide comble l'entaille 48 et exerce un effort de poussée sur l'épaulement 46 du serre-flan 4. L'effort de poussée, exercé sur l'épaulement 46, contre l'action du ressort 5 et fait coulisser le serre-flan 4 dans la cavité 21 annulaire pour le placer en position haute de moulage. En d'autres termes, l'effort de poussée exercé par la couche 8 en phase fluide dans l'entaille 48 du serre-flan 4 permet d'escamoter le serre-flan 4 dans la cavité 21 annulaire.

Lors du passage du serre-flan 4 en position haute de moulage, la surface supérieure 42 annulaire du serre-flan 4 bute contre l'épaulement 22 de la cavité 21 annulaire.

En outre, en position haute de moulage, l'épaulement 46 du serre-flan 4 forme une empreinte de moulage délimitant la couche 8.

De plus, l'encoche 23 permet de former une autre empreinte de moulage de la couche 8.

Après l'injection de la couche 8, le châssis supérieur 11 est écarté du châssis inférieur 10 pour dégagé le poinçon 2 de l'ouverture 31, et pour permettre la récupération de l'élément multicouche ainsi produit.

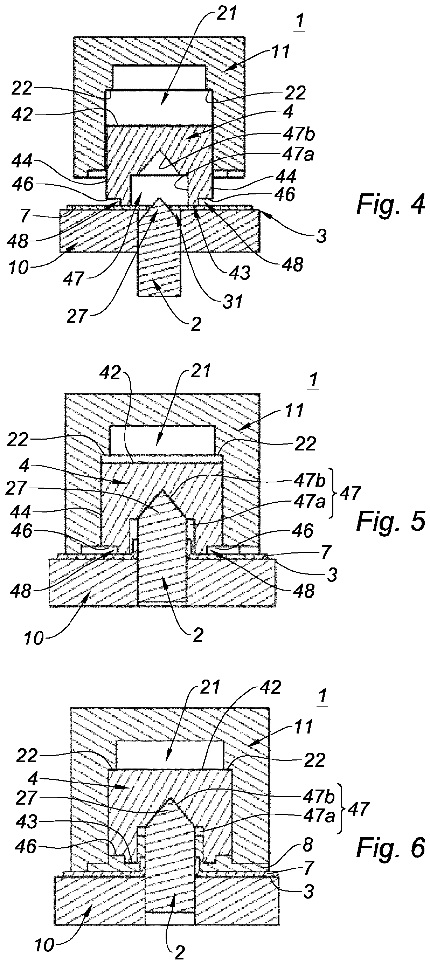

On peut se reporter aux figures 4 à 6 pour apprécier le deuxième mode de réalisation de l'invention. Comme on peut l'observer, selon le deuxième mode de réalisation, le dispositif 1 de production d'un élément multicouche présentant au moins un poinçonnage comprend la matrice 3 réalisée dans le châssis inférieur 10 d'un moule d'une presse à injecter.

La matrice 3 présente l'ouverture 31. Selon le deuxième mode de réalisation, l'ouverture 31 est configurée pour recevoir le poinçon 2.

De même que pour le premier mode de réalisation, selon le deuxième mode de réalisation, le châssis inférieur 10 et le châssis supérieur 11 sont déplacés l'un par rapport à l'autre, par exemple, par un ensemble de vérins non représentés.

Selon le deuxième mode de réalisation présenté sur les figures 4 à 6, le poinçon 2 présente la géométrie d'une tige de section circulaire présentant une portion d'extrémité 27.

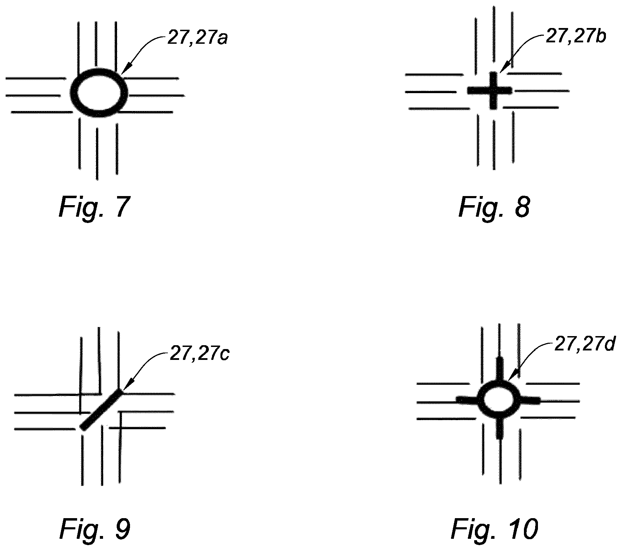

Comme on peut l'observer sur les figures 7 à 10, selon le deuxième mode de réalisation, plusieurs variantes de la portion d'extrémité 27 du poinçon 2 sont possibles.

Selon une première variante, visible sur la figure 7, le poinçon 2 présente une portion d'extrémité 27a sensiblement conique.

Selon une deuxième variante, visible sur la figure 8, le poinçon 2 présente une portion d'extrémité 27b sensiblement cruciforme.

Selon une troisième variante, visible sur la figure 9, le poinçon 2 présente une portion d'extrémité 27c effilée.

Selon une quatrième variante, visible sur la figure 10, le poinçon 2 présente une portion d'extrémité 27d comprenant une portion cruciforme sur laquelle est positionnée une portion conique.

Ces quatre variantes permettent au poinçon 2 de sectionner avec une grande rapidité des fibres du matériau composite constituant la nappe 7.

Comme on peut l'observer sur les figures 4 à 6, selon le deuxième mode de réalisation, le poinçon loge dans l'ouverture 31.

Dans l'ouverture 31, le poinçon 2 peut être actionné, par exemple, par un dispositif de commande hydraulique non représenté ici.

Le châssis supérieur 11 présente une cavité cylindrique 28.

La cavité cylindrique 28 présente l'épaulement 22 intérieur annulaire.

Le dispositif 1 comprend, en outre, le serre-flan 4.

Selon le deuxième mode de réalisation, le serre-flan 4 présente une géométrie sensiblement cylindrique, complémentaire de la géométrie de la cavité cylindrique 28, permettant l'introduction du serre-flan 4 dans la cavité cylindrique 28.

Selon le deuxième mode de réalisation présenté sur les figures 4 à 6, le serre-flan 4 présente une empreinte 47 positionnée de sorte que le serre-flan 4 présente la surface annulaire inférieure 43. De plus, le serre-flan 4, selon le deuxième mode de réalisation, présente la surface cylindrique extérieure 44 et une surface supérieure 42.

L'empreinte 47 présente une portion cylindrique 47a présentant un diamètre supérieur au diamètre du poinçon 2, et une portion de fond 47b. La portion de fond 47b présente une géométrie complémentaire de la géométrie de la portion d'extrémité 27 du poinçon 2.

De plus, le serre-flan 4 présente l'épaulement 46 au niveau de la jonction de la surface cylindrique extérieure 44 avec la surface annulaire inférieure 43. L'épaulement 46 délimite l'entaille 48.

A l'usage, selon le deuxième mode de réalisation, la nappe 7 est positionnée sur la matrice 3. La nappe 7 est en matériau composite.

Initialement, le poinçon 2 est en position rétractée et le serre-flan 4 est en position basse de maintien. En position rétractée, selon le deuxième mode de réalisation, le poinçon 2 est logé dans l'ouverture 31 et n'entre pas en contact avec la nappe 7. En position basse de maintien, la surface annulaire inférieure 43 du serre-flan 4 exerce une pression sur la nappe 7. La pression exercée par le serre-flan sur la nappe 7 permet de maintenir en position la nappe 7.

On note que le deuxième mode de réalisation est compatible avec la réalisation d'une amorce de perforation dans la nappe 7.

Cette opération ajoute un cout de préparation mais présente l'intérêt de moins contraindre localement la nappe 7 lors de la remontée du poinçon 2 et d'en faciliter la mise en forme.

Comme on peut le voir sur les figures 4 et 5, le poinçon 2 est ensuite manœuvré pour passer en position déployée de poinçonnage. En position déployée de poinçonnage, le poinçon 2 transperce la portion de nappe 7 placée au dessus de l'ouverture 31.

Selon le deuxième mode de réalisation, durant le passage en position déployée, la portion d'extrémité 27 effilée du poinçon 2 traverse la nappe 7 puis bute dans la partie de fond 47b de l'empreinte 47. Comme on peut le voir sur la figure 6, en butant dans la partie de fond 47b de l'empreinte 47, la portion d'extrémité 27 du poinçon 2 exerce une pression sur le serre-flan 4 qui coulisse dans la cavité cylindrique 28 jusqu'à buter contre l'épaulement 22. Ainsi, selon le deuxième mode de réalisation, le passage en position déployée du piston permet de placer le serre-flan 4 en position haute de moulage.

De plus, comme on peut l'observer sur la figure 5, après le poinçonnage, une portion de la nappe située autour du poinçonnage réalisé, est coincée dans la portion cylindrique 47a de l'empreinte 47, contre le poinçon 2. Ainsi, selon le deuxième mode de réalisation, le mouvement du poinçon 2 permet de poinçonner la nappe 7 et de plier une portion de la nappe 7 située autour du poinçonnage de manière à obtenir une conformation dite en « collet-monté ».

Après le poinçonnage de la nappe 7, la portion d'extrémité 27 du poinçon 2 est maintenue dans l'empreinte 47.

Une couche 8 est injectée sur la nappe 7.

Le maintien en position déployée permet au poinçon 2 d'avoir fonction de noyau lors de l'injection de la couche 8.

Selon le deuxième mode de réalisation ici présenté, la couche 8 peut être en matériau thermoplastique.

Lors de l'injection, l'épaulement 46 du serre-flan 4 forme une empreinte de moulage délimitant la couche 8. De plus, lors de l'injection, la couche 8 fluide peut pénétrer dans la portion cylindrique 47a de l'empreinte 47 pour recouvrir la portion de nappe 7 précédemment pliée.

Après l'injection de la couche 8, le châssis supérieur 11 est écarté du châssis inférieur 10 pour permettre la récupération de l'élément multicouche ainsi produit.

Ainsi, l'invention fournit un dispositif et un procédé de production d'un élément multicouche présentant au moins un poinçonnage, permettant de poinçonner une nappe et d'injecter une couche dans un même outil tout en garantissant la tenue et l'intégrité de la nappe.

Bien entendu, l'invention n'est nullement limitée aux modes de réalisation décrit ci-dessus et illustré par les différentes figures, ce mode de réalisation n'ayant été donné qu'à titre d'exemple. Des modifications restent possibles, notamment du point du point de vue de la constitution des divers éléments ou par la substitution d'équivalents techniques, sans pour autant sortit du domaine de l'invention.

## Revendications

1. Dispositif (1) de production d'un élément multicouche comprenant au moins une nappe (7) en matériau composite et une couche (8) en matière plastique et présentant au moins un poinçonnage traversant la nappe (7) et étant entouré par la couche (8), le dispositif (1) comprenant (i) une matrice (3) présentant au moins une ouverture (31), (ii) un châssis supérieur (11), (iii) au moins un serre-flan (4) mobile par rapport au châssis supérieur (11) entre une position basse de maintien et une position haute de moulage et destiné à venir en regard de l'ouverture (31), et (iv) au moins un poinçon (2) mobile entre une position rétractée et une position déployée dans laquelle le poinçon (2) est configuré pour coulisser dans l'ouverture (31) et poinçonner la nappe (7) interposée entre la matrice (3) et le serre-flan (4), et définir un noyau pour l'injection de la couche (8), le serre-flan (4) étant configuré pour maintenir la nappe (7) positionnée sur la matrice (3), dans sa position basse de maintien, lors du poinçonnage par le poinçon (2) et pour former une empreinte de moulage avec le poinçon (2) délimitant la couche (8), dans sa position haute de moulage.

2. Dispositif (1) selon la revendication 1 **caractérisé en ce que** le châssis supérieur (11) comprend des moyens d'appui élastique du serre-flan (4) en position basse de maintien et des moyens de butée du serre-flan (4) en position haute de moulage, qui permettent de borner le déplacement du serre-flan (4).

3. Dispositif (1) selon l'une des revendications 1 à 2, **caractérisé en ce que** le châssis supérieur (11) comprend au moins une cavité (21) configurée pour recevoir le serre-flan (4).

4. Dispositif (1) selon les revendications 2 et 3, **caractérisé en ce que** les moyens d'appui élastique comprennent un ressort (5) positionné dans la cavité (21) et configuré pour exercer un effort sur le serre-flan (4), pour faire passer le serre-flan (4) de la position haute de moulage à la position basse de maintien.

5. Dispositif (1) selon les revendications 2 et 3, **caractérisé en ce que** les moyens d'appui élastique comprennent un organe de commande hydraulique positionné dans la cavité (21) et configuré pour exercer un effort sur le serre-flan (4), de manière à déplacer le serre-flan (4) entre la position haute de moulage et la position basse de maintien.

6. Dispositif (1) selon l'une des revendications 3 à 5, **caractérisé en ce que** le serre-flan (4) présente une géométrie annulaire configurée pour coulisser autour du poinçon (2) dans la cavité (21).

7. Dispositif (1) selon l'une des revendications 1 à 6 **caractérisé en ce que** le serre-flan (4) comprend au moins une entaille (48) dans laquelle la matière formant la couche (8) s'engage pour faire passer le serre-flan (4) de la position basse de maintien à la position haute de moulage.

8. Dispositif (1) selon la revendication 1, **caractérisé en ce que** le serre-flan (4) présente une empreinte (47) configurée pour recevoir une portion d'extrémité (27) du poinçon (2) en position déployée, pour faire passer le serre-flan (4) de la position basse de maintien à la position haute de moulage et pour former une empreinte de moulage avec la portion d'extrémité (27) du poinçon (2).

9. Procédé de production d'un élément multicouche avec un dispositif selon l'une des revendications 1 à 8, le procédé comprenant les étapes de :
- Fourniture d'une nappe (7) en matériau composite;
- Positionnement de la nappe (7) sur la matrice (3) ;
- Positionnement du serre-flan (4) en position basse de maintien pour maintenir la nappe (7) contre la matrice (3) ;
- Déplacement du poinçon (2) en position déployée de poinçonnage, dans l'ouverture (31), pour poinçonner la nappe (7) ;
- Injection d'une couche (8) sur la nappe (7), dans une cavité délimitée par la matrice (3), le châssis supérieur (11), le poinçon (2) et le serre-flan (4) en position haute de moulage ;
- Formation, par le serre-flan (4) et le poinçon (2), d'une ouverture de moulage sur la couche (8) ;
- Déplacement du poinçon (2) en position rétractée ;
- Fourniture d'un élément multicouche comprenant une nappe (7-8) présentant un poinçonnage et une couche (8) qui entoure le poinçonnage.

## Patentansprüche

1. Vorrichtung (1) zur Herstellung eines Mehrschichtelements, umfassend mindestens eine Bahn (7) aus Verbundmaterial und eine Schicht (8) aus Kunststoff und mindestens eine Stanzung aufweisend, welche die Bahn (7) durchsetzt und von der Schicht (8) umgeben ist, wobei die Vorrichtung (1) (i) eine Matrize (3), die mindestens eine Öffnung (31) aufweist, (ii) einen oberen Rahmen (11), (iii) mindestens einen Niederhalter (4), der in Bezug auf den oberen Rahmen (11) zwischen einer unteren Halteposition und einer oberen Formposition beweglich und dazu bestimmt ist, der Öffnung (31) gegenüber zu treten, und (iv) mindestens einen Stempel (2) umfasst, der zwischen einer zurückgezogenen Position und einer ausgefahrenen Position beweglich ist, in welcher der Stempel (2) ausgestaltet ist, in die Öffnung (31) zu gleiten und die Bahn (7), die zwischen der Matrize (3) und dem Niederhalter (4) eingefügt ist, zu stanzen und einen Kern zum Einspritzen der Schicht (8) zu definieren, wobei der Niederhalter (4) ausgestaltet ist, die Bahn (7), die auf der Matrize (3) positioniert ist, in seiner unteren Halteposition beim Stanzen durch den Stempel (2) zu halten und ein Formnest mit dem Stempel (2), das die Schicht (8) begrenzt, in seiner oberen Formposition zu bilden.

2. Vorrichtung (1) nach Anspruch 1, **dadurch gekennzeichnet, dass** der obere Rahmen (11) elastische Auflagemittel für den Niederhalter (4) in der unteren Halteposition und Anschlagmittel für den Niederhalter (4) in der oberen Formposition umfasst, die es ermöglichen, die Verschiebung des Niederhalters (4) einzuschränken.

3. Vorrichtung (1) nach einem der Ansprüche 1 bis 2, **dadurch gekennzeichnet, dass** der obere Rahmen (11) mindestens einen Hohlraum (21) umfasst, der ausgestaltet ist, den Niederhalter (4) aufzunehmen.

4. Vorrichtung (1) nach den Ansprüchen 2 und 3, **dadurch gekennzeichnet, dass** die elastischen Auflagemittel eine Feder (5) umfassen, die in dem Hohlraum (21) positioniert und ausgestaltet ist, eine Kraft auf den Niederhalter (4) auszuüben, um den Niederhalter (4) von der oberen Formposition in die untere Halteposition zu bringen.

5. Vorrichtung (1) nach den Ansprüchen 2 und 3, **dadurch gekennzeichnet, dass** die elastischen Auflagemittel ein hydraulisches Steuerorgan umfassen, das in dem Hohlraum (21) positioniert und ausgestaltet ist, eine Kraft auf den Niederhalter (4) auszuüben, um den Niederhalter (4) zwischen der oberen Formposition und der unteren Halteposition zu verschieben.

6. Vorrichtung (1) nach einem der Ansprüche 3 bis 5, **dadurch gekennzeichnet, dass** der Niederhalter (4) eine ringförmige Geometrie aufweist, die ausgestaltet ist, um den Stempel (2) in den Hohlraum (21) zu gleiten.

7. Vorrichtung (1) nach einem der Ansprüche 1 bis 6, **dadurch gekennzeichnet, dass** der Niederhalter (4) mindestens eine Einkerbung (48) umfasst, in die das Material, das die Schicht (8) bildet, eingreift, um den Niederhalter (4) von der unteren Halteposition in die obere Formposition zu bringen.

8. Vorrichtung (1) nach Anspruch 1, **dadurch gekennzeichnet, dass** der Niederhalter (4) eine Vertiefung (47) aufweist, die ausgestaltet ist, einen Endabschnitt (27) des Stempels (2) in der ausgefahrenen Position aufzunehmen, um den Niederhalter (4) von der unteren Halteposition in die obere Formposition zu bringen und um ein Formnest mit dem Endabschnitt (27) des Stempels (2) zu bilden.

9. Verfahren zur Herstellung eines Mehrschichtelements mit einer Vorrichtung nach einem der Ansprüche 1 bis 8, wobei das Verfahren folgende Schritte umfasst:
- Bereitstellen einer Bahn (7) aus Verbundmaterial;
- Positionieren der Bahn (7) auf der Matrize (3);
- Positionieren des Niederhalters (4) in der unteren Halteposition, um die Bahn (7) gegen die Matrize (3) zu halten;
- Verschieben des Stempels (2) in die ausgefahrene Stanzposition, in die Öffnung (31), um die Bahn (7) zu stanzen;
- Einspritzen einer Schicht (8) auf die Bahn (7), in einen von der Matrize (3) begrenzten Hohlraum, der obere Rahmen (11), der Stempel (2) und der Niederhalter (4) in der oberen Formposition;
- Bilden, durch den Niederhalter (4) und den Stempel (2), einer Formöffnung auf der Schicht (8);
- Verschieben des Stempels (2) in die zurückgezogene Position;
- Bereitstellen eines Mehrschichtelements, umfassend eine Bahn (7-8), die eine Stanzung und eine Schicht (8) aufweist, welche die Stanzung umgibt.

## Claims

1. Device (1) for producing a multilayer element comprising at least one web (7) of composite material and one layer (8) of plastic material and having at least one punching passing through the web (7) and being surrounded by the layer (8), the device (1) comprising (i) a die (3) having at least one opening (31), (ii) an upper frame (11), (iii) at least one blank holder (4) which is movable relative to the upper frame (11) between a lower holding position and an upper molding position and intended to come opposite to the opening (31), and (iv) at least one punch (2) which is movable between a retracted position and a deployed position in which the punch (2) is configured to slide in the opening (31) and punch the web (7) which is interposed between the die (3) and the blank holder (4), and define a core for the injection of the layer (8), the blank holder (4) being configured to hold the web (7) positioned on the die (3), in its lower holding position, during the punching by the punch (2) and to form a molding cavity with the punch (2) delimiting the layer (8), in its upper molding position.

2. Device (1) according to claim 1, **characterized in that** the upper frame (11) comprises elastic support means of the blank holder (4) in the lower holding position and stop means for the blank holder (4) in the upper molding position, which allow limiting the movement of the blank holder (4).

3. Device (1) according to any of claims 1 to 2, **characterized in that** the upper frame (11) comprises at least one cavity (21) configured to receive the blank holder (4).

4. Device (1) according to claims 2 and 3, **characterized in that** the elastic support means comprise a spring (5) which is positioned in the cavity (21) and configured to exert a force on the blank holder (4), to move the blank holder (4) from the upper molding position to the lower holding position.

5. Device (1) according to claims 2 and 3, **characterized in that** the elastic support means comprise a hydraulic control member positioned in the cavity (21) and configured to exert a force on the blank holder (4), so as to displace the blank holder (4) between the upper molding position and the lower holding position.

6. Device (1) according to any of claims 3 to 5, **characterized in that** the blank holder (4) has an annular geometry which is configured to slide around the punch (2) in the cavity (21).

7. Device (1) according to any of claims 1 to 6, **characterized in that** the blank holder (4) comprises at least one notch (48) in which the material forming the layer (8) is engaged to move the blank holder (4) from the lower holding position to the upper molding position.

8. Device (1) according to claim 1, **characterized in that** the blank holder (4) has an imprint (47) configured to receive an end portion (27) of the punch (2) in the deployed position, to move the blank holder (4) from the lower holding position to the upper molding position and to form a molding imprint with the end portion (27) of the punch (2).

9. Method for producing a multilayer element with a device according to any of claims 1 to 8, the method comprising the steps of:
- Providing a web (7) of composite material;
- Positioning the web (7) on the die (3);
- Positioning of the blank holder (4) in the lower holding position to hold the web (7) against the die (3);
- Displacing the punch (2) in the deployed punching position, in the opening (31), to punch the web (7);
- Injecting a layer (8) on the web (7), in a cavity which is delimited by the die (3), the upper frame (11), the punch (2) and the blank holder (4) in the upper molding position;
- Forming, by the blank holder (4) and the punch (2), a molding opening on the layer (8);
- Displacing the punch (2) in the retracted position;
- Providing a multilayer element comprising a web (7-8) having a punching and a layer (8) which surrounds the punching.
